# DEMANDE DE BREVET EUROPEEN

(11) **EP 2 572 577 A1**
(43) Date de publication de la demande: **27.03.2013**
(21) Numéro de dépôt: 12185091.1
(22) Date de dépôt: 19.09.2012
(51) Int. Cl.: A01N 1/02, F25D 17/06, F25D 3/10, F25D 3/11

(54) **Ensemble de congélation d'une pluralité de tubes de conditionnement chacun rempli d'un volume prédéterminé de substance biologique**

(30) Priorité: 20.09.2011 FR 1158329
(71) Demandeur: IMV Technologies, 61300 Saint-Ouen-Sur-Iton (FR)
(72) Inventeur: Beau, Christian, 78117 Toussus le Noble (FR); Camus, Agnès, 61370 Sainte Gauburge Sainte Colombe (FR); Schmitt, Eric, 53700 Villaines-La-Juhel (FR)
(74) Mandataire: Bas, Fabien

(57) **Abrégé**

L'invention concerne un ensemble de congélation d'une pluralité de tubes de conditionnement chacun rempli d'un volume prédéterminé de substance biologique, dans lequel chaque dit tube (5) est entraîné en rotation dans un flux d'agent de refroidissement, ledit ensemble comportant une enceinte de refroidissement (9) configurée pour être traversée par ledit flux d'agent de refroidissement et une unité de conditionnement (6) amovible et placée dans ladite enceinte (9) ; ladite unité (6) est pourvue d'une contenance plus grande que ladite pluralité de dits tubes pour accueillir directement cette pluralité de dits tubes, ladite enceinte (9) est fixe et ledit ensemble comporte une unité d'entraînement en rotation (19) de ladite unité de conditionnement (6), laquelle unité d'entraînement en rotation (19) est pourvue d'une interface de connexion (25, 26) sur laquelle est rapportée ladite unité de conditionnement (6) amovible.

## Description

La présente invention a trait au domaine général de la congélation de substance biologique, en particulier aux ensembles de congélation d'une pluralité de tubes de conditionnement chacun rempli d'un volume prédéterminé de substance biologique.

Ces tubes de conditionnement sont par exemple des tubes capillaires également appelés « paillettes ».

On sait que la congélation de telles paillettes nécessite de suivre un processus de congélation définissant une cinétique de températures pour amener la substance biologique à une température négative inférieure à leur zone de transition vitreuse.

Cette cinétique de températures est possible par exemple par la mise en oeuvre d'une première phase dite d'équilibration et d'une deuxième phase dite de congélation, laquelle peut être divisée en plusieurs sous-phases de congélation.

Par exemple, les paillettes sont disposées à une température de l'ordre de +4°C durant une première période déterminée, par exemple quelques heures, afin de les faire reposer. C'est la phase d'équilibration. Ensuite, les paillettes sont soumises à une première descente en température, d'abord de +4°C à -10°C avec un pas de l'ordre de -5°C/min ; puis une deuxième descente en température de -10°C à -150°C avec un pas de l'ordre de -40°C/min. Ce sont respectivement les première et deuxième sous-phases de congélation que comporte la phase de congélation.

La cinétique exposée ci-dessus est indiquée dans le cas où la phase de remplissage est effectuée à température ambiante.

On observera que la cinétique de températures dépend de la phase de remplissage des paillettes puisqu'en effet, la mise en oeuvre de cette cinétique est différente suivant les cas où cette phase de remplissage est effectuée à température ambiante ou à une température inférieure à la température ambiante.

Dans le cas où les paillettes sont remplies à une température de l'ordre de +4°C, la phase d'équilibration n'est alors pas nécessaire et les paillettes sont directement introduites dans un système de congélation.

Pour effectuer des telles cinétiques, il est nécessaire de disposer d'un système de remplissage et d'un ensemble de congélation comportant notamment plusieurs systèmes de congélation (ou un système de congélation pourvu de plusieurs zones froides) et optionnellement un système d'équilibration.

Généralement, pour être remplies, les paillettes sont disposées horizontalement et de manière ordonnée, c'est-à-dire rangées à plat, dans des gorges spécifiques ménagées sur un convoyeur mobile. Ces gorges sont conformées de sorte à accueillir un type de paillettes particulier afin que ces dernières soient rangées de manière homogène.

Après que les paillettes aient été remplies chacune d'un certain volume de substance biologique à température ambiante, elles sont extraites des gorges du convoyeur de la machine de remplissage et sont introduites dans des boîtes en plastique conformées elles aussi de sorte à ce que les paillettes soient alignées les unes à côtés des autres, c'est-à-dire rangées de manière homogène. Ces boîtes sont mises à reposer dans une zone d'équilibration. Ensuite, les paillettes sont extraites de la boîte en plastique pour être introduites dans des systèmes de congélation.

Dans le cas où les paillettes sont remplies chacune d'un volume prédéterminé de substance biologique à une température de l'ordre de +4°C, alors elles sont extraites des gorges du convoyeur de la machine de remplissage et sont directement introduites dans des systèmes de congélation.

Ces systèmes de congélation ont généralement la forme d'un congélateur conventionnel dans lequel sont disposés horizontalement des racks, lesquels sont pourvus d'emplacements destinés à recevoir de manière ordonnée des paillettes préalablement remplies chacune d'un volume prédéterminé de substance biologique. En variante, chaque paillette est introduite dans un tube cylindrique ou hexagonal spécifique, quelques uns (un nombre prédéterminé) de ces tubes cylindriques ou hexagonaux sont introduits et rangés dans un gobelet et plusieurs gobelets sont disposés verticalement et superposés à l'intérieur d'un canister disposé quant à lui verticalement dans le congélateur.

On connaît également du brevet américain US 4,227,381 un système de congélation, notamment de paillettes remplies de substance biologique, pourvu d'une enceinte de refroidissement traversée par un flux d'agent de refroidissement entrant dans cette enceinte par un conduit d'admission et sortant de cette enceinte par un conduit de sortie. Cette enceinte présente un espace interne dans lequel est introduit un unique container ayant une pluralité d'étuis de conditionnement rangés de manière ordonnée, c'est-à-dire alignés côte à côte et superposés, à l'intérieur du container. Dans chaque étui de conditionnement est rangée une paillette ou une ampoule préalablement remplie d'un volume de substance biologique à congeler.

Le container, les étuis introduits dans ce container ainsi que les paillettes ou ampoules remplies chacune d'un volume de substance biologique et introduites dans ces étuis sont disposés dans l'enceinte de refroidissement suivant une direction similaire à celle définie entre son raccord d'entrée et son raccord de sortie.

Le système est en outre pourvu d'une unité d'entraînement en rotation de l'enceinte de refroidissement sur elle-même. Pour cela, l'enceinte de refroidissement est en inter-engagement mécanique permettant l'entraînement en rotation au niveau de son raccord d'admission. Cette enceinte de refroidissement est en outre en inter-engagement mécanique permettant la rotation au niveau de son raccord de sortie, lequel raccord de sortie est connecté à un conduit de sortie du flux d'agent de refroidissement.

Pour congeler les paillettes, l'enceinte de refroidissement est mise en rotation sur elle-même et le flux d'agent de refroidissement s'écoule le long du container fermé qui comporte les étuis contenant chacun une paillette. Les paillettes sont donc entraînées en rotation tout en étant maintenues dans les étuis, lesquels sont maintenus dans l'unique container.

L'invention concerne un ensemble visant à simplifier le processus de congélation mis en oeuvre dans les ensembles de congélation de l'état de la technique de manière simple, commode et économique.

L'invention a ainsi pour objet un ensemble de congélation d'une pluralité de tubes de conditionnement chacun rempli d'un volume prédéterminé de substance biologique, dans lequel chaque dit tube de conditionnement est entraîné en rotation dans un flux d'agent de refroidissement, ledit ensemble comportant une enceinte de refroidissement configurée pour être traversée par ledit flux d'agent de refroidissement et une unité de conditionnement amovible et placée dans ladite enceinte de refroidissement ; ledit ensemble étant **caractérisé en ce que** ladite unité de conditionnement est pourvue d'une contenance plus grande que ladite pluralité de dits tubes de conditionnement pour accueillir directement cette pluralité de dits tubes de conditionnement ; en ce que ladite enceinte de refroidissement est fixe ; et en ce qu'il comporte une unité d'entraînement en rotation de ladite unité de conditionnement, laquelle unité d'entraînement en rotation est pourvue d'une interface de connexion sur laquelle est rapportée ladite unité de conditionnement amovible.

Dans l'ensemble selon l'invention, l'enceinte de refroidissement est fixe et de ce fait, l'unité de conditionnement est entraînée en rotation par rapport à cette enceinte dans laquelle elle est placée. Les tubes de conditionnement sont donc eux aussi entraînés en rotation par rapport à l'enceinte.

La disposition directe d'une pluralité de tubes de conditionnement dans une même unité de conditionnement, laquelle est donc le contenant primaire des tubes de même que chaque étui individuel du système antérieur susmentionné, le caractère amovible de l'unité de conditionnement, sa configuration à être mise en rotation et le fait que cette dernière peut être rapportée simplement sur l'interface de connexion de l'unité d'entraînement en rotation, permet à cette unité de conditionnement d'être utilisée durant tout le processus de congélation, c'est-à-dire aussi bien durant la phase d'équilibration si elle existe que durant la phase de congélation.

Cela signifie qu'après le remplissage des tubes de conditionnement, ces derniers peuvent être directement introduits dans l'unité de conditionnement, laquelle peut ensuite être disposée dans une zone d'équilibration durant une période prédéterminée ; puis cette unité de conditionnement peut être extraite de cette zone d'équilibration pour être introduite dans une zone froide pour la phase de congélation. En variante, après le remplissage des tubes de conditionnement (à température prédéterminée inférieure à la température ambiante), ces tubes sont introduits dans l'unité de conditionnement, laquelle est directement disposée dans une zone froide pour la phase de congélation.

On observera bien entendu que si la phase de congélation présente plusieurs sous-phases qui se déroulent dans des zones froides différentes, l'unité de conditionnement peut être déplacée de l'une à l'autre de ces zones sans manipulation complémentaire des tubes de conditionnement.

Grâce à l'invention, une seule opération de mise en place des tubes de conditionnement dans l'unité de conditionnement suffit après remplissage de ces tubes de conditionnement ; ce qui simplifie l'ensemble du processus de congélation puisqu'un certain nombre de manipulations des tubes de conditionnement peut ainsi être évité.

On observera que dans les systèmes connus, le rangement ordonné des tubes de conditionnement (autrement dit une certaine homogénéité de rangement) est considéré comme une étape indispensable à l'homogénéité de congélation de ces tubes.

Les travaux effectués par les inventeurs ont en effet révélé que, de façon surprenante, le brassage des tubes de conditionnement dans l'unité de conditionnement non seulement n'empêche pas l'homogénéité de congélation, mais favorise au contraire cette homogénéité.

On observera encore que dans le procédé selon l'invention, les tubes de conditionnement peuvent être mis en vrac à l'intérieur de l'unité de conditionnement.

L'ensemble selon l'invention permet donc de simplifier le processus de congélation des tubes chacun rempli d'un volume de substance biologique tout en restant particulièrement commode et économique.

Selon des caractéristiques préférées simples, commodes et économiques de l'ensemble selon l'invention :
- il comporte un système d'équilibration pourvu d'une zone d'équilibration à une première température stable prédéterminée, laquelle zone est configurée pour recevoir durant une première période prédéterminée ladite au moins une unité de conditionnement ;
- il comporte au moins un système de congélation pourvu d'au moins une zone de congélation formée par ladite enceinte de refroidissement, laquelle zone est configurée pour être refroidie par ledit flux d'agent de refroidissement qui y circule, entre une deuxième température prédéterminée et une troisième température prédéterminée ;
- ladite deuxième température prédéterminée est inférieure ou égale à ladite troisième température prédéterminée ;
- ladite unité d'entraînement en rotation est montée sur ladite enceinte de refroidissement ;
- ladite unité d'entraînement en rotation est fixée à l'extérieur de ladite enceinte de refroidissement et présente un arbre d'entraînement s'étendant de ladite unité d'entraînement en rotation et se prolongeant jusqu'à déboucher à l'intérieur de ladite enceinte de refroidissement, ledit arbre d'entraînement étant pourvu à une extrémité de ladite interface de connexion, laquelle extrémité se trouve dans ladite enceinte de refroidissement ;
- ladite interface de connexion est formée par un support pourvu d'une pièce de fixation configurée pour coopérer avec ladite unité de conditionnement ;
- ladite unité de conditionnement présente une paroi de fond métallique et la pièce de fixation est formée par une portion magnétique disposée dans ledit support, laquelle portion magnétique permet la fixation par aimantation de ladite unité de conditionnement sur ledit support, par l'intermédiaire de ladite paroi de fond ;
- ladite unité de conditionnement est configurée pour être entraînée en rotation sur elle-même ;
- ladite unité de conditionnement présente au moins une paroi latérale longitudinale et un espace interne configurée pour accueillir, suivant ladite direction longitudinale de ladite au moins une paroi latérale, ladite pluralité de dits tubes de conditionnement ; et/ou
- ladite unité de conditionnement est configurée pour être placée dans ladite enceinte de refroidissement de telle sorte que ledit flux d'agent de refroidissement rencontre ladite au moins une paroi latérale.

Selon d'autres caractéristiques préférées simples, commodes et économiques de l'ensemble selon l'invention, ladite unité de conditionnement présente au moins une paroi latérale longitudinale dans laquelle est ménagée au moins une ouverture et ladite au moins une unité de conditionnement est disposée dans ladite enceinte de telle sorte que ledit flux d'agent de refroidissement passe au travers de ladite au moins une ouverture pour rencontrer lesdits tubes de conditionnement.

L'ouverture ménagée dans l'unité de conditionnement permet de faire subir aux tubes de conditionnement (introduits dans l'unité) à la fois un phénomène de convection thermique et un phénomène de conduction thermique pour la congélation des volumes de substance biologique présents dans ces tubes. En effet, le phénomène de conduction se produit lorsque les tubes de conditionnement entrent en contact avec une surface latérale interne de la paroi latérale de l'unité de conditionnement du fait que le flux d'agent de refroidissement entre également en contact avec cette paroi latérale (sur une surface latérale externe) ; et le phénomène de convection se produit lorsque ce flux d'agent de refroidissement traverse l'ouverture et entre directement en contact avec les tubes de conditionnement.

Selon d'autres caractéristiques préférées simples, commodes et économiques de l'ensemble selon l'invention :
- ladite au moins une ouverture présente la forme d'une fenêtre s'étendant suivant ladite direction longitudinale ;
- ladite au moins une ouverture est formée par une série de fentes débouchantes et successivement disposées suivant ladite direction longitudinale, chaque fente ayant une direction principale distincte de ladite direction longitudinale ;
- ladite unité de conditionnement présente au moins une paroi latérale longitudinale et comporte un couvercle amovible métallique et au moins un organe magnétique permettant la fixation par aimantation dudit couvercle amovible sur ladite au moins une paroi latérale ;
- ledit couvercle présente une portion de préhension ;
- il comporte plusieurs unités de conditionnement pourvues chacune d'une paroi frontale et d'une paroi de fond opposée à ladite paroi frontale, lesquelles définissent avec ladite au moins une paroi latérale au moins partiellement un espace interne ; une première desdites unités de conditionnement présente un orifice de réception ménagé dans ladite paroi frontale et configuré pour recevoir un élément de raccordement saillant d'une paroi de fond d'une deuxième desdites unités de conditionnement avec laquelle ladite première unité de conditionnement est agencée pour coopérer ; et ladite première unité de conditionnement présente un élément de raccordement saillant de ladite paroi de fond et configuré pour être introduit dans un orifice de réception ménagé dans une paroi frontale d'une troisième desdites unités de conditionnement avec laquelle ladite première unité de conditionnement est également agencée pour coopérer ; et/ou
- ladite unité de conditionnement présente une paroi frontale et une paroi de fond opposée à ladite paroi frontale, lesquelles définissent avec au moins une paroi latérale au moins partiellement un espace interne ; ladite paroi frontale est configurée pour être montée à fleur d'une première extrémité de la dite au moins une paroi latérale ; et ladite paroi de fond est configurée pour être montée contre ladite surface latérale interne de la dite au moins une paroi latérale, à proximité d'une deuxième extrémité de cette paroi latérale qui est opposée à ladite première extrémité.

On va maintenant poursuivre l'exposé de l'invention par la description d'exemples de réalisation, donnée ci-après à titre illustratif et non limitatif, en référence aux dessins annexés sur lesquels :
- la figure 1 représente, schématiquement en perspective, un système de congélation conforme à un premier mode de réalisation, lequel système est partiellement arraché pour montrer son intérieur et en particulier une unité de conditionnement qui y est disposée ;
- la figure 2 est une vue de derrière du système de la figure 1 ;
- la figure 3 est une vue prise en coupe selon III sur la figure 2 ;
- la figure 4 est une vue de détail prise selon IV sur la figure 3 ;
- la figure 5 représente, schématiquement en perspective et de manière isolée, l'unité de conditionnement de la figure 1 ;
- la figure 6 est une vue en coupe prise selon VI sur la figure 5 ;
- la figure 7 représente, schématiquement en perspective et de manière éclatée, l'unité de conditionnement de la figure 5 ;
- les figures 8 à 10 sont des vues similaires à celles des figures 5 à 7 montrant une variante de l'unité de conditionnement ;
- la figure 11 représente schématiquement un système de congélation conforme à un deuxième mode de réalisation, lequel système comporte une zone de congélation dans laquelle sont introduites plusieurs unités de conditionnement ;
- la figure 12 représente, schématiquement en perspective et de manière isolée, la zone de congélation visible à la figure 11;
- la figure 13 représente, schématiquement en perspective et de manière éclatée, la zone de congélation de la figure 12 ;
- la figure 14 est une vue de face de la zone de congélation de la figure 12 ;
- les figures 15 et 16 sont des vues prises en coupe selon XV et XVI sur la figure 14 ; et
- la figure 17 représente schématiquement un ensemble de congélation d'une pluralité de tubes de conditionnement chacun rempli d'un volume de substance biologique.

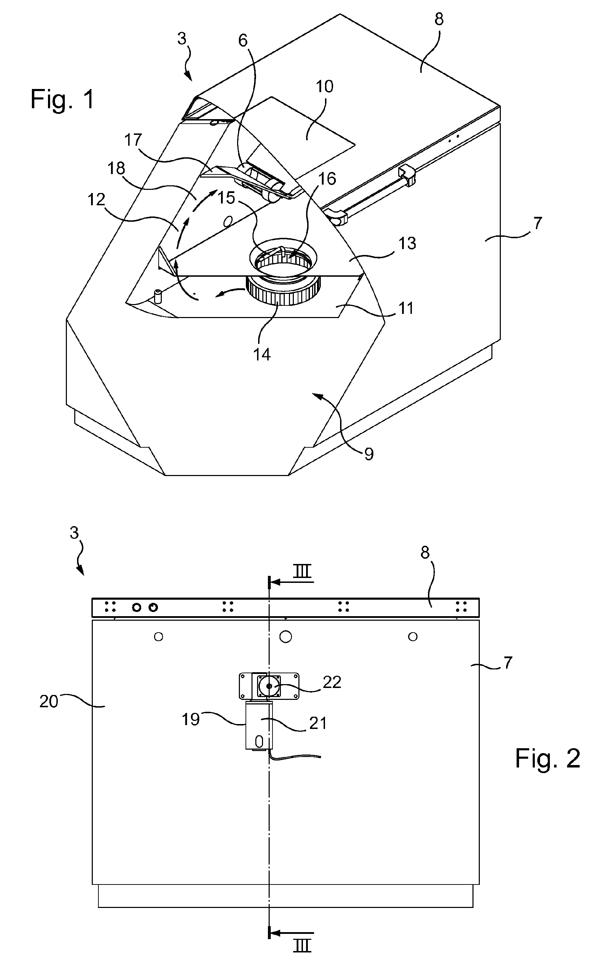

En se référant aux figures 1 à 3 et 11, on voit deux systèmes de congélation 3 et 203 configurés pour congeler des tubes de conditionnement 5 remplis chacun d'un volume faible prédéterminé de substance biologique.

La notion de congélation est ici comprise au sens général du terme et signifie donc la descente en température jusqu'à une température négative, en dessous de 0°C.

La substance biologique à congeler est ici formée par exemple par du liquide séminal ou encore des échantillons tissulaires. Cette substance biologique nécessite d'être amenée à une température négative inférieure à leurs zones de transition vitreuses afin de pouvoir la manipuler avec le minimum de risque pour les cellules biologiques qu'elle comporte.

La notion de congélation englobe donc ici des températures pouvant descendre jusqu'à -140°C, voire même des températures inférieures à -150°C.

La congélation de cette substance biologique nécessite de suivre une cinétique de températures pour l'amener à une température négative inférieure à leur zone de transition vitreuse.

Cette cinétique de températures est possible par la mise en oeuvre d'une première phase dite d'équilibration et d'une deuxième phase dite de congélation, laquelle peut être divisée en plusieurs sous-phases de congélation.

Par exemple, après remplissage des tubes de conditionnement à température ambiante, ces tubes sont disposés à une température de l'ordre de +4°C durant une première période déterminée, par exemple quelques heures, afin de les faire reposer. C'est la phase d'équilibration. Ensuite, ces tubes sont soumis à une première descente en température, d'abord de +4°C à -10°C avec un pas de l'ordre de -5°C/min ; puis une deuxième descente en température de -10°C à -140°C avec un pas de l'ordre de -40°C/min. Ce sont respectivement les première et deuxième sous-phases de congélation que comporte la phase de congélation.

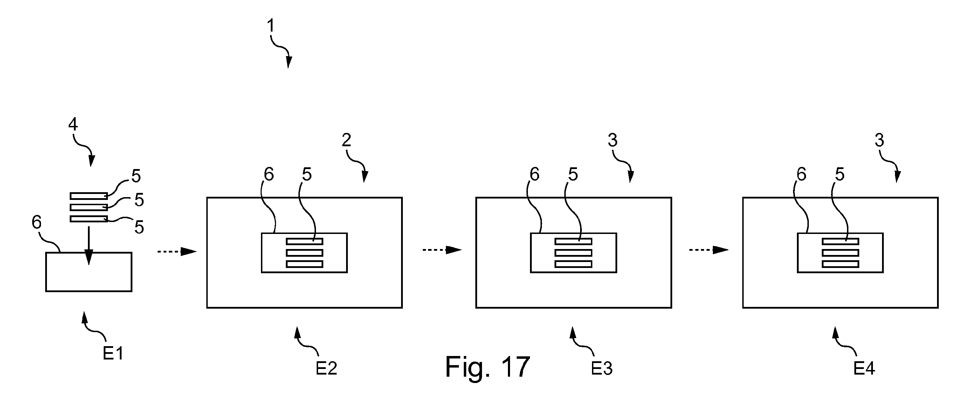

Pour effectuer une telle cinétique, il est nécessaire de disposer d'un ensemble de congélation 1 comportant un système d'équilibration 2 et plusieurs systèmes de congélation 3. Un tel ensemble est visible à la figure 17.

La figure 17 illustre le processus de congélation tel qu'il est défini ci-dessus.

Bien entendu, des étapes préalables et postérieures sont nécessaires.

Tout d'abord, les tubes de conditionnement, appelés ici paillettes 5, sont chacun remplis d'un volume prédéterminé de substance biologique dans des machines de remplissage spécifiques (étape de remplissage non représentée), ici à température ambiante, soit environ 20°C. Pour réaliser cette étape de remplissage, les paillettes sont généralement disposées à plat sur un convoyeur.

Suite à cette étape de remplissage des paillettes 5, le processus de congélation tel que défini ci-dessus peut débuter par une étape d'introduction d'un certain nombre de paillettes 5 dans une unité de conditionnement 6 formant un réceptacle appelé dans la suite de la description tambour. Cette étape, aussi appelée phase de remplissage des tambours 6, est notée E1 sur la figure 17 et est effectuée sur un poste de remplissage 4 de tambours 6.

Les paillettes 5 sont mises en vrac dans l'unité de conditionnement 6. Autrement dit, aucun rangement ordonné des paillettes 5 n'est recherché à cette étape.

En outre, on observera qu'une pluralité de paillettes est introduite dans l'unité 6, par exemple entre environ 50 et environ 200 paillettes, ce qui représente un volume de remplissage du tambour 6 d'environ 10% à environ 30% de sa contenance.

Sa contenance est donc plus grande que la pluralité de paillettes.

Le processus de congélation se poursuit par une étape d'équilibration E2, appelée aussi phase d'équilibration ou encore première phase, effectuée dans un système d'équilibration 2.

Ce système d'équilibration 2 comporte généralement une vitrine réfrigérée (non représentée) dans laquelle est introduit le tambour 6 contenant les paillettes 5.

Comme indiqué ci-dessus, la vitrine réfrigérée est à une première température prédéterminée, par exemple de l'ordre de +4°C. Le tambour 6 est disposé dans cette vitrine réfrigérée durant une première période prédéterminée, par exemple quelques heures.

Le processus de congélation se poursuit par l'extraction du tambour 6 du système d'équilibration 2 et la disposition de ce tambour 6 dans un premier système de congélation 3 pour une première étape de congélation E3, appelée aussi première sous-phase de congélation.

Ce premier système de congélation 3 est à une deuxième température prédéterminée, par exemple de l'ordre de +4°C également et ce premier système de congélation 3 est en outre configuré pour faire descendre cette deuxième température prédéterminée jusqu'à par exemple -10°C à l'aide d'un flux d'agent de refroidissement tel que de l'azote gazeux à un pas d'environ -5°C/min.

Le processus de congélation se poursuit encore par l'extraction du tambour 6 du premier système de congélation 3 puis par l'insertion de ce tambour 6 dans un deuxième système de congélation 3 (similaire au premier système de congélation 3) pour une deuxième étape de congélation E4, appelée aussi deuxième sous-phase de congélation.

Ce tambour 6 est disposé dans ce deuxième système de congélation 3 à une troisième température prédéterminée, par exemple de l'ordre de -10°C.

Ce deuxième système de congélation 3 est configuré pour abaisser cette troisième température prédéterminée jusqu'à atteindre par exemple -140°C, voire -150°C grâce à la circulation d'un flux d'agent de refroidissement tel que de l'azote gazeux également, à un pas d'environ -40°C/min.

Le processus de congélation tel que défini ci-dessus est terminé à la fin de l'étape E4.

Au cours des étapes E1 à E4, seulement une manipulation des paillettes 5 est nécessaire puisque c'est ensuite le tambour 6 qui est manipulé avec les paillettes 5 à l'intérieur.

Une étape postérieure de stockage est généralement mise en oeuvre. Cette étape de stockage nécessite l'extraction du tambour 6 du deuxième système de congélation 3 et la mise en place directement du tambour 6 dans un système de stockage (non représenté) par exemple formé d'un bac rempli d'un agent de refroidissement tel que de l'azote liquide qui va accueillir directement le tambour 6. En variante, les paillettes 5 sont extraites du tambour 6 et sont directement immergées dans ce bac d'azote liquide ; ou les paillettes 5 sont extraites du tambour 6, introduites en plus grande quantité dans un gobelet spécifique, lequel est immergé dans le bac d'azote liquide.

Les figures 1 à 3 illustrent un système de congélation 3.

Ce système de congélation 3 présente une forme parallélépipédique rectangle similaire à celle d'un congélateur conventionnel.

Ce système de congélation 3 présente un coffre 7 surmonté d'un couvercle 8 articulé à ce coffre 7.

Ce coffre 7 présente un espace interne formant une enceinte de refroidissement 9. Le couvercle 8 présente une ouverture vitrée 10 permettant de voir à l'intérieur de cette enceinte 9.

L'enceinte de refroidissement 9 forme une chambre froide divisée en une zone inférieure 11 et en une zone supérieure 12.

La zone inférieure 11 est une zone d'arrivée et d'expulsion d'un agent de refroidissement tel que de l'azote passant de sa forme liquide à sa forme gazeuse.

Le système de congélation 3 présente en outre une plaque de séparation partielle 13 formant une interface entre la zone supérieure 12 et la zone inférieure 11 ainsi qu'un dispositif d'expulsion 14, tel qu'une turbine pourvue de pales, disposée sous la plaque 13 dans la zone inférieure 11.

La plaque de séparation 13 est pourvue d'un orifice circulaire traversant 16 qui débouche au centre de la turbine 14.

Le système de congélation 3 présente en outre un conduit de cheminement 15 de l'azote sous forme liquide qui débouche au centre de l'orifice 16.

Ce conduit 15 fait partie d'un dispositif d'injection pourvu notamment d'une électrovanne (non représentée), laquelle est configurée pour délivrer de l'azote présent dans un réservoir spécifique et pour réguler le débit d'azote liquide injecté dans l'enceinte de refroidissement 9.

On voit également sur la figure 1 que le tambour 6 dans lequel sont insérées des paillettes 5 (non visibles) est introduit dans la zone supérieure 12 du système de congélation 3.

Le système de congélation 3 présente en outre une plaque de guidage 17 fixée contre une paroi interne 18 dans la zone supérieure 12.

Cette plaque de guidage 17 est disposée à proximité du tambour 6 et présente des formes spécifiques configurées pour guider le flux d'agent de refroidissement, comme cela sera décrit ci-après.

Le système de congélation 3 présente en outre une unité d'entraînement en rotation 19 formée ici par un moteur électrique 21 associé à un réducteur 22.

Cette unité d'entraînement en rotation 19 est fixée sur une face arrière 20 du coffre 7, c'est-à-dire à l'extérieur de l'enceinte de refroidissement 9 (figures 2 à 4).

Cette unité d'entraînement en rotation 19 est en outre pourvue d'un arbre rotatif 23 qui s'étend à partir du réducteur 22, qui traverse un orifice traversant 24 ménagé dans la face arrière 20 du coffre 7, avec cet orifice 24 qui débouche dans la zone supérieure 12.

Cet arbre rotatif 23 présente une extrémité opposée au réducteur 22 qui est disposée dans la zone supérieure 12, laquelle extrémité est pourvue d'un support 25 formé ici par un épaulement conformé sur cet arbre 23.

Ce support 25 présente en son centre une portion magnétique 26.

L'ensemble support 25 et sa portion magnétique 26 forment une interface de connexion du tambour 6.

Bien entendu, ce système de congélation 3 est configuré de telle sorte que la zone supérieure 12 est au moins partiellement étanche aux fluides gazeux malgré l'orifice 24.

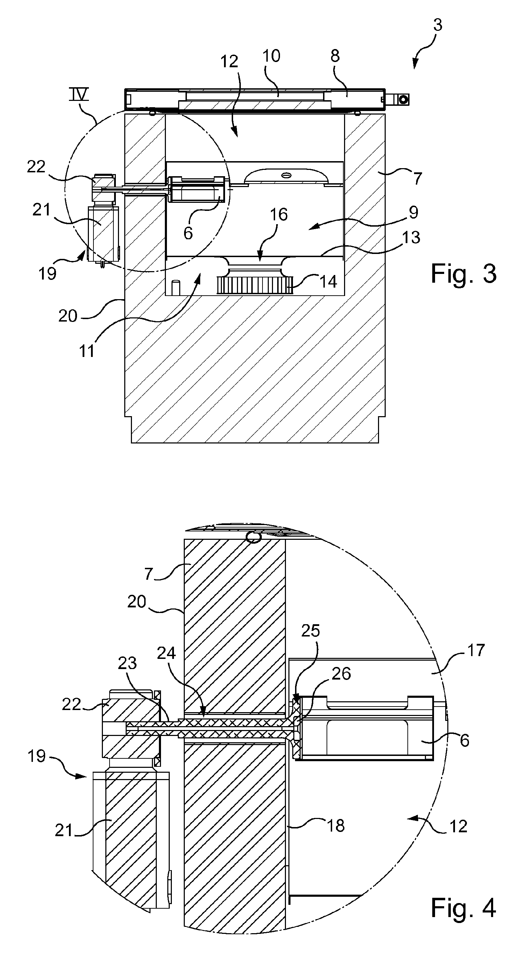

On voit sur les figures 3 et 4 que le tambour 6 est fixé directement sur l'interface de connexion formé par le support 25 et sa portion 26.

Ainsi, ce tambour 6 est configuré pour être entraîné en rotation par l'arbre rotatif 23 de l'unité d'entraînement en rotation 19.

Le tambour 6 est ici métallique, amovible et fixé de manière non permanente sur le support 25 par aimantation grâce à la portion magnétique 26.

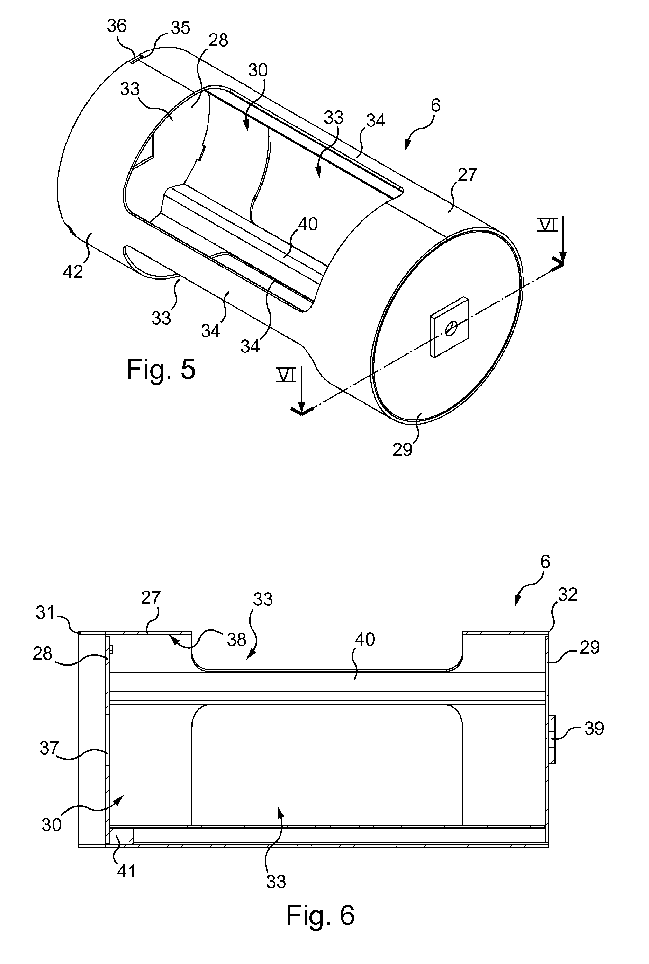

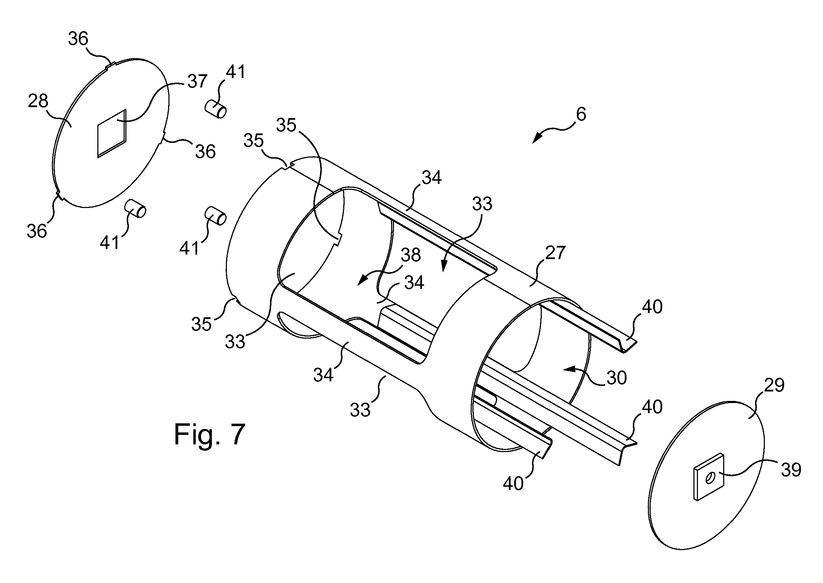

On va maintenant décrire plus en détail le tambour 6 en référence aux figures 5 à 7.

Le tambour 6 présente une forme générale circulaire, voire cylindrique.

Ce tambour 6 est pourvu d'une paroi latérale 27 cylindrique, d'une paroi frontale 28 et d'une paroi de fond 29 ; lesquelles parois 27, 28 et 29 définissent un espace interne 30 au tambour 6, significatif de sa contenance.

La paroi latérale cylindrique 27 s'étend suivant une direction générale longitudinale.

La paroi latérale 27 présente ici une première extrémité 31 et une deuxième extrémité 32 opposée à la première extrémité 31.

Le tambour 6 présente en outre trois ouvertures ayant chacune la forme d'une fenêtre 33 ménagée dans la paroi latérale 27.

Ces fenêtres 33 s'étendent à la fois longitudinalement et sur le contour de cette paroi latérale 27.

Ces trois fenêtres 33 sont régulièrement réparties sur le contour de la paroi latérale 27 et sont séparées les unes des autres par des bras 34 sur le contour de cette paroi 27.

La paroi latérale 27 présente en outre à sa première extrémité 31 trois échancrures 35 régulièrement réparties sur le contour de cette extrémité 31.

La paroi frontale 28 a une forme de plaque circulaire formant un couvercle amovible et cette paroi frontale 28 est métallique.

Du contour de cette paroi frontale 28 saillent trois ergots 36 régulièrement répartis et configurés pour être reçus à l'intérieur des échancrures 35 de la paroi latérale 27 ; permettant ainsi un bon assemblage du couvercle amovible formé par cette paroi frontale 28 avec la paroi latérale 27.

Cette paroi frontale 28 présente en outre un orifice rectangulaire 37 ménagé en son centre.

La paroi de fond 29 a également une forme de plaque circulaire et cette paroi de fond 29 est métallique.

Un élément de raccordement 39 saille centralement de cette paroi de fond 29. Cet élément de raccordement 39 présente une forme rectangulaire et est percé en son centre.

Le tambour 6 présente en outre trois aubes 40 longitudinales ayant chacune la forme d'une plaque pliée à 120°C environ.

Ces trois aubes 40 sont fixées sur une surface latérale interne 38 de la paroi latérale 27 de manière longitudinale au niveau des bras 34 respectifs.

Chaque aube 40 présente un pli dirigé vers l'intérieur du tambour 6.

Comme on le verra plus en détail plus loin, ces trois aubes 40 conforment la surface latérale interne 38 de la paroi latérale 27 de telle manière que les paillettes 5 introduites dans le tambour 6 sont mises en mouvement les unes par rapport aux autres et par rapport à la paroi latérale 27 de l'unité 6, autrement dit les paillettes 5 sont brassées, lorsque ce dernier est en rotation sur lui-même, avec un axe de rotation qui est coaxial à la paroi latérale 27.

Le tambour 6 présente en outre trois organes magnétiques 41 formés ici par des plots.

Ces plots 41 sont chacun disposés entre une aube 40 et la surface latérale interne 38 de la paroi latérale 27, à proximité de la première extrémité 31 de cette paroi latérale 27.

La paroi frontale 28 formant le couvercle amovible peut ainsi être disposée contre la surface latérale interne 38 de la paroi latérale 27 (autrement dit à l'intérieur de cette paroi latérale 27) et est maintenue par aimantation grâce au plot magnétique 41.

A l'opposé, la paroi de fond 29 est fixée de manière permanente à la paroi latérale 27 au niveau de sa deuxième extrémité 32.

On remarquera que la paroi frontale 28 est montée à proximité de la première extrémité 31 de la paroi latérale 27 mais pas à fleur de cette première extrémité 31, contrairement à la paroi de fond 29 qui est montée à fleur de la deuxième extrémité de la paroi latérale 27.

On va maintenant décrire le procédé de congélation des paillettes 5 à l'aide du système de congélation 3.

Comme on l'a vu en référence à la figure 17, un utilisateur voulant mettre en oeuvre l'ensemble du processus de congélation des paillettes doit sélectionner un nombre prédéterminé, ou pas, de paillettes 5 et introduire ces paillettes 5 dans l'espace interne 30 du tambour 6 (étape E1).

Les paillettes 5 sont disposées en vrac mais longitudinalement sur la direction longitudinale dans laquelle s'étend la paroi latérale 27.

Bien entendu, le couvercle amovible formé par la paroi frontale 28 du tambour 6 est mis en place de manière à fermer frontalement le tambour 6 pour que les paillettes 5 ne puissent s'échapper de l'espace interne 30 du tambour 6.

On notera que les paillettes 5 doivent avoir une longueur adaptée à la longueur du tambour 6 afin qu'elles ne s'échappent pas par les fenêtres 33.

Ensuite, le tambour 6, qui est ici amovible, est introduit dans la zone supérieure 12 du système de congélation 3 en ayant préalablement ouvert le couvercle 8.

Le tambour 6 est disposé horizontalement en regard du support 25 de l'arbre rotatif 23, avec la paroi frontale 28 qui vient se fixer par aimantation à ce support 25 grâce à cette paroi frontale qui est métallique et à la portion magnétique 26 que comporte ce support 25.

On notera qu'ici le tambour 6 est monté coaxial avec l'arbre rotatif 23. L'axe de rotation du tambour 6 est donc également coaxial à la paroi latérale 27 et le tambour 6 est ainsi configuré pour être entraîné en rotation sur lui-même.

Ensuite, l'utilisateur peut mettre en marche l'unité d'entraînement en rotation 19, c'est-à-dire alimenter électriquement le moteur électrique 21 pour mettre en rotation l'arbre rotatif 23 et ainsi mettre en rotation sur lui-même le tambour 6.

La mise en rotation sur lui-même du tambour 6 permet, grâce aux trois aubes 40 de mettre en mouvement de la manière indiquée plus haut les paillettes 5 disposées dans ce tambour 6.

L'utilisateur peut ensuite faire passer un flux de l'agent de refroidissement dans la zone supérieure 12 afin que ce flux rencontre le tambour 6 et congèle les volumes de substance biologique.

Le chemin fluidique emprunté par l'azote gazeux est représenté par des flèches sur la figure 1.

Pour cela, le dispositif d'injection (non représenté) est mis en fonctionnement afin d'injecter l'azote liquide via le conduit 15 dans la zone inférieure 11, au centre de la turbine 14.

L'azote liquide est injecté au dessus et au centre de la turbine 14, au niveau de l'orifice 16 ménagé dans la plaque de séparation 13.

L'azote liquide est ainsi amené dans la zone inférieure 11 qui est sensiblement à la pression atmosphérique.

De ce fait, l'azote liquide subit un phénomène de détente puisqu'il est préalablement sous pression et ce phénomène de détente le fait passer de sa phase liquide à sa phase gazeuse de sorte que les pales de la turbine 14 expulsent le flux d'azote gazeux dans la zone supérieure 12 en le faisant tout d'abord cheminer sous la plaque 13.

En effet, ce flux d'azote gazeux s'écoule d'abord sous la plaque de séparation 13 puis rencontre des parois arrondies (non représentées) qui le guident de la zone inférieure 11 vers la zone supérieure 12 de sorte que le flux d'azote gazeux s'élève dans la zone supérieure 12 en direction du tambour 6 qui est en rotation sur lui-même.

Le flux d'azote gazeux continue son chemin jusqu'à rencontrer une face inférieure de la plaque de guidage 17 qui est configurée de telle sorte que le flux d'azote gazeux est dirigé directement vers le tambour 6.

Ce flux d'azote gazeux rencontre donc le tambour 6 et plus particulièrement, le flux d'azote gazeux rencontre successivement et directement la surface latérale externe 42 de la paroi latérale 27 et les paillettes 5 puisque le flux d'azote gazeux passe à travers les fenêtres 33 (et par conséquent le flux rencontre aussi la surface latérale interne 32).

Ici, le flux d'azote gazeux rencontre transversalement le tambour 6, c'est-à-dire que ce flux vient buter sensiblement perpendiculairement contre la paroi latérale 27 et entre aussi sensiblement perpendiculairement dans l'espace interne 30 via les fenêtres 33.

Cette étape de congélation (ou sous étape de congélation) est réalisée pendant une période prédéterminée.

Ici, les volumes de substance biologique présents dans les paillettes 5 bénéficient d'un bon échange thermique du fait à la fois du brassage de ces paillettes 5, du phénomène de conduction qu'ils subissent par le biais de la paroi latérale 27 et du phénomène de convection qu'ils subissent du fait des fenêtres 33.

Comme on l'a vu précédemment, il est possible pour l'utilisateur de répéter cette étape de congélation dans d'autres systèmes de congélation à des températures de plus en plus basses.

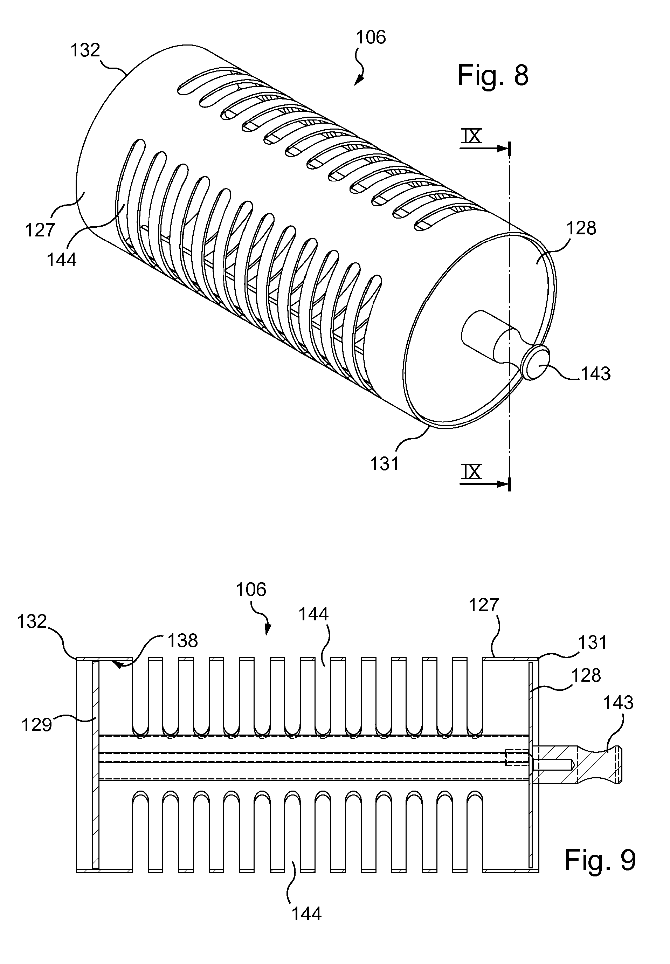

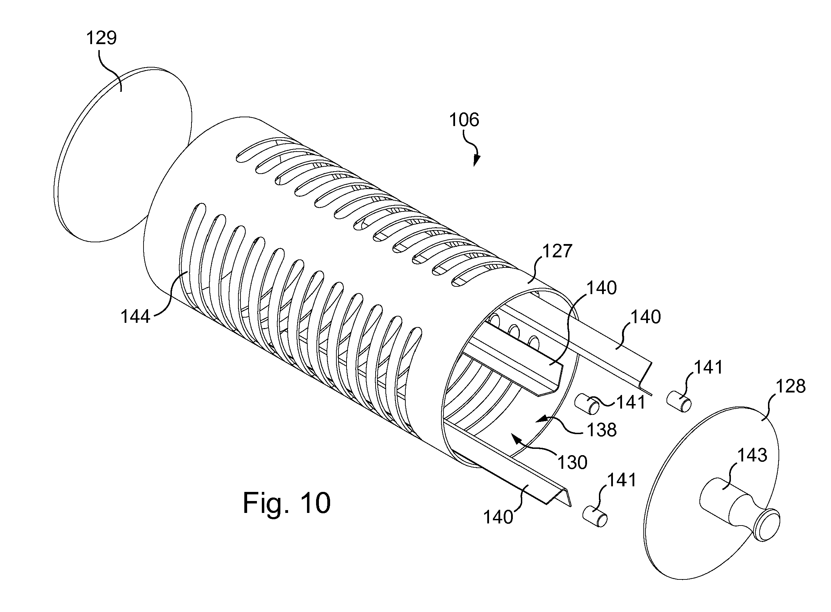

On va maintenant décrire en référence aux figures 8 à 10 une variante de réalisation du tambour.

D'une manière générale on a employé pour les éléments similaires, les mêmes références utilisées pour le tambour 6 illustré sur les figures 5 à 7 mais additionnées du nombre 100.

Le tambour 106, appelé plus généralement unité de conditionnement, a sensiblement la même forme générale que le tambour 6 et présente sensiblement les mêmes caractéristiques que ce tambour 6.

En effet, le tambour 106 a une forme générale cylindrique avec un espace interne 130 défini par une paroi latérale cylindrique 127, une paroi frontale 128 et une paroi de fond 129.

En outre, le tambour 106 présente de manière similaire au tambour 6, trois aubes 140 disposées contre la surface latérale interne 138 de la paroi latérale 127 ainsi que trois plots magnétiques 141 disposés chacun entre une aube 140 et la surface latérale interne 138.

A la différence du tambour 6, le tambour 106 présente des ouvertures ici formées par une série de fentes 144 qui sont débouchantes au travers de la paroi latérale 127 et qui sont successivement disposées suivant la direction longitudinale du tambour 106.

Chaque fente 144 a en outre une direction principale distincte de la direction longitudinale et en particulier ici, ces fentes 144 s'étendent chacune suivant une direction perpendiculaire à la direction longitudinale.

Chaque ouverture du tambour 106 présente douze fentes 144 identiques et le tambour 106, tout comme le tambour 6, présente trois ouvertures régulièrement réparties sur le contour de la paroi latérale 127.

En outre, la paroi latérale 127 du tambour 106 est quant à elle dépourvue d'échancrure au niveau de sa première extrémité 131.

Le tambour 106 présente en outre une portion de préhension 143 ménagée centralement en saillie de la paroi frontale 128, à la place de l'orifice 37 ménagé sur la paroi frontale 28 du tambour 6.

La paroi de fond 129 est quant à elle une plaque métallique pleine et ne présente pas d'élément de raccordement tel que l'élément de raccordement 39 de la paroi de fond 29 du tambour 6.

Tout comme le tambour 6, la paroi frontale 128 du tambour 106 est amovible et montée par aimantation grâce au plot 141 et au fait que cette paroi frontale est métallique ; et cette paroi frontale 128 est montée contre la surface latérale interne 138 de la paroi latérale 127, à proximité de la première extrémité 131, mais pas à fleur de cette première extrémité 131.

A la différence du tambour 6, la paroi de fond 129 du tambour 106 n'est pas montée à fleur de la deuxième extrémité 132 de la paroi latérale 127 mais tout comme la paroi frontale 128, la paroi de fond 129 est montée contre la surface latérale interne 138 de la paroi latérale 127, à proximité de cette deuxième extrémité 132.

Cette paroi de fond 129 est fixée de manière permanente à la paroi latérale 127.

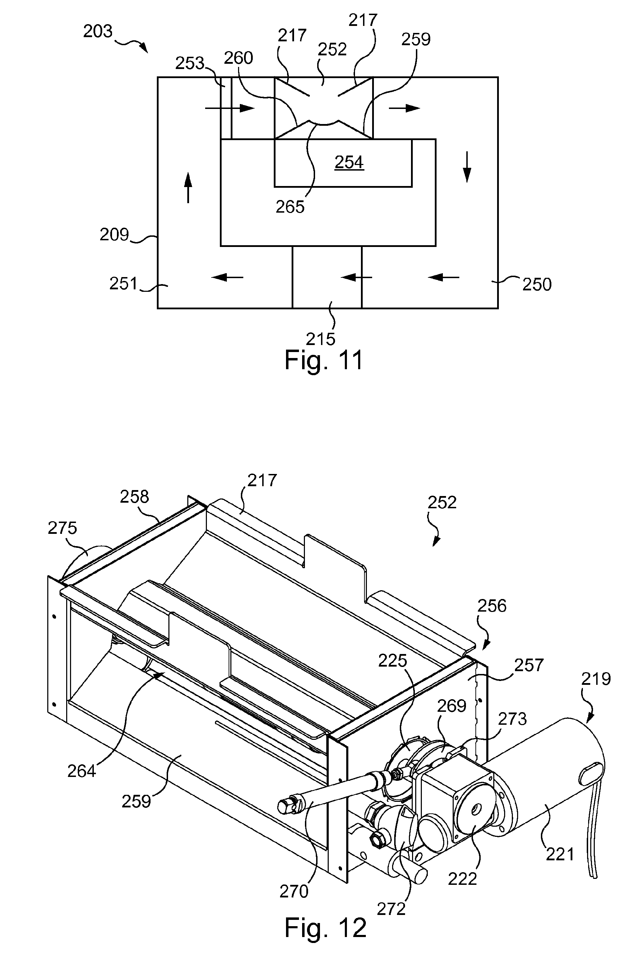

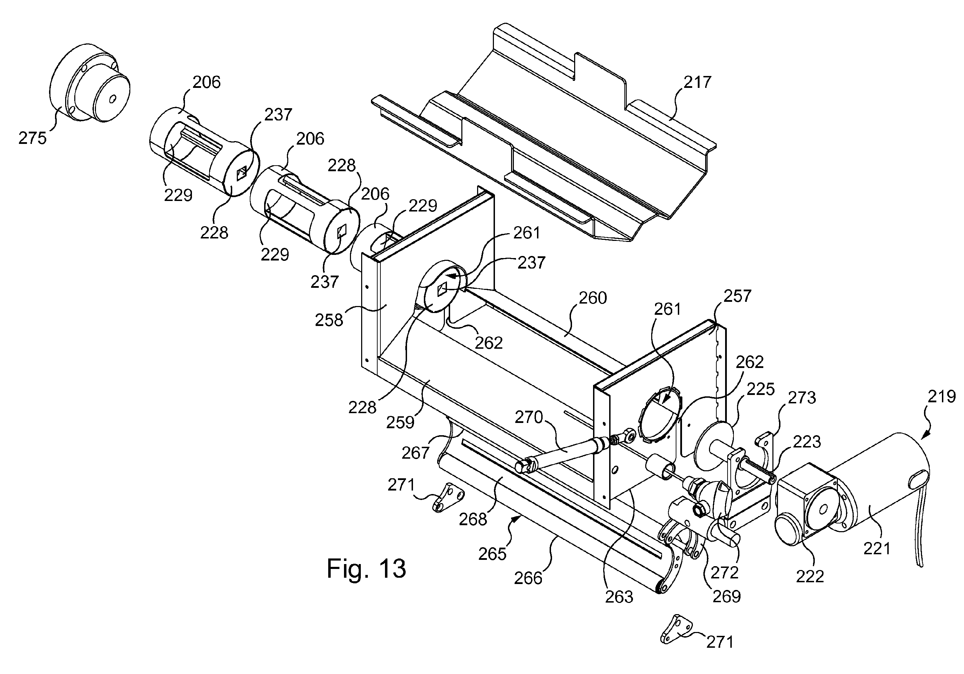

Les figures 11 à 16 illustrent un deuxième mode de réalisation du système de congélation.

D'une manière générale on a employé pour les éléments similaires, les mêmes références utilisées pour le système de congélation 3 des figures 1 à 4 mais additionnées du nombre 200 et les mêmes références utilisées pour le tambour 6 des figures 5 à 7 mais additionnées également du nombre 200.

Le système de congélation 203 présente la forme d'une veine gazeuse représentée très schématiquement sur la figure 11.

Cette veine gazeuse 203 comporte une enceinte de refroidissement 209, un ventilateur centrifuge 250 et une partie 215 d'un dispositif d'injection d'azote liquide provenant d'un réservoir externe (non représenté).

L'enceinte de refroidissement 209 est formée d'un couloir de guidage 251 du flux d'agent de refroidissement (l'azote gazeux), couloir 251 dans lequel est introduit un redresseur statique 253 à proximité d'une zone de congélation 252.

Le redresseur statique 253 permet de diriger convenablement le flux gazeux et en même temps de l'accélérer en direction de la zone de congélation 252, grâce à la structure alvéolée ou grillagée qu'il présente.

Le système de congélation 203 présente en outre une zone de récupération 254 disposée sous la zone de congélation 252.

Le chemin fluidique emprunté par l'azote gazeux est représenté par des flèches sur la figure 11.

La zone de congélation 252 est configurée pour recevoir plusieurs tambours 206 visibles sur les figures 12 à 16.

La zone de congélation 251 présente des nervures de guidage 217, 259 et 260 du flux gazeux à son entrée et à sa sortie ainsi qu'un organe de maintien 265 des tambours 206, comme on le verra en détail ci-après.

La zone de récupération 254 est configurée pour récupérer ces tambours 206 une fois les volumes de substance biologique congelés. Cette zone 254 est formée par un tiroir amovible présentant une plaque de réception (non représentée) des tambours 206 divisant cette zone en deux parties, l'une inférieure dans laquelle est présent de l'azote liquide et l'autre supérieure dans laquelle est présent de l'azote gazeux pour ne pas créer un trop grand gradient de température entre les étapes de congélation, récupération et stockage.

Le système de congélation 203 présente en outre une unité d'entraînement en rotation 219 (non visible sur la figure 11) qui est montée à l'extérieure de la zone de congélation 252.

On va maintenant décrire plus en détail cette zone de congélation 252 en référence aux figures 12 à 16.

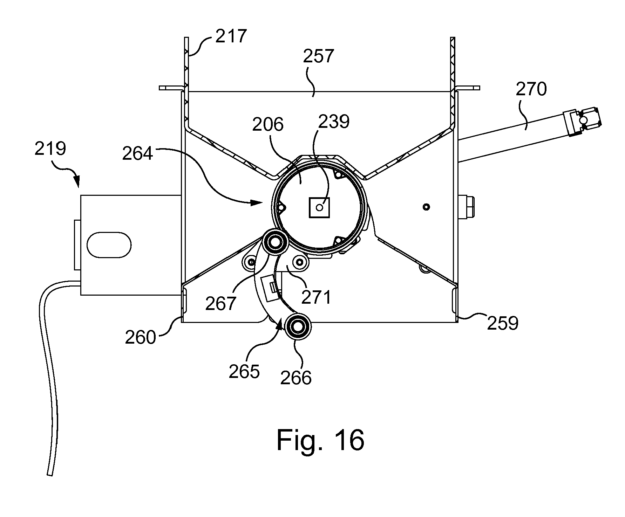

La zone de congélation 252 présente une armature métallique 256 formée par deux flasques 257 et 258 qui sont opposés et par deux supports 259 et 260 (formant les nervures de guidage) qui sont eux aussi opposés (figures 12 et 16) et qui rejoignent chacun les deux flasques 257 et 258.

Chaque flasque présente en son centre un orifice circulaire 261 ainsi qu'une fente 262 ménagée sur une partie de la hauteur de chaque flasque 257, 258 et qui débouche sur un bord inférieur 263 respectif de chacun des flasques 257, 258.

La zone de congélation 252 présente en outre une plaque de guidage 217 (formant aussi une nervure de guidage) du flux d'azote gazeux, laquelle plaque 217 est disposée en regard des supports 259 et 260, entre les flasques 257 et 258 et à l'opposé des bords inférieurs 263 de ces flasques 257, 258.

Ainsi assemblée, la zone de congélation 252 présente un couloir interne 264 destiné à recevoir trois tambours 206.

On remarquera que ces tambours 206 sont identiques au tambour 6 illustré sur les figures 5 à 7.

Ces trois tambours 206 sont disposés dans la zone de congélation 252 et en particulier dans le couloir interne 264 de manière alignée suivant la direction longitudinale.

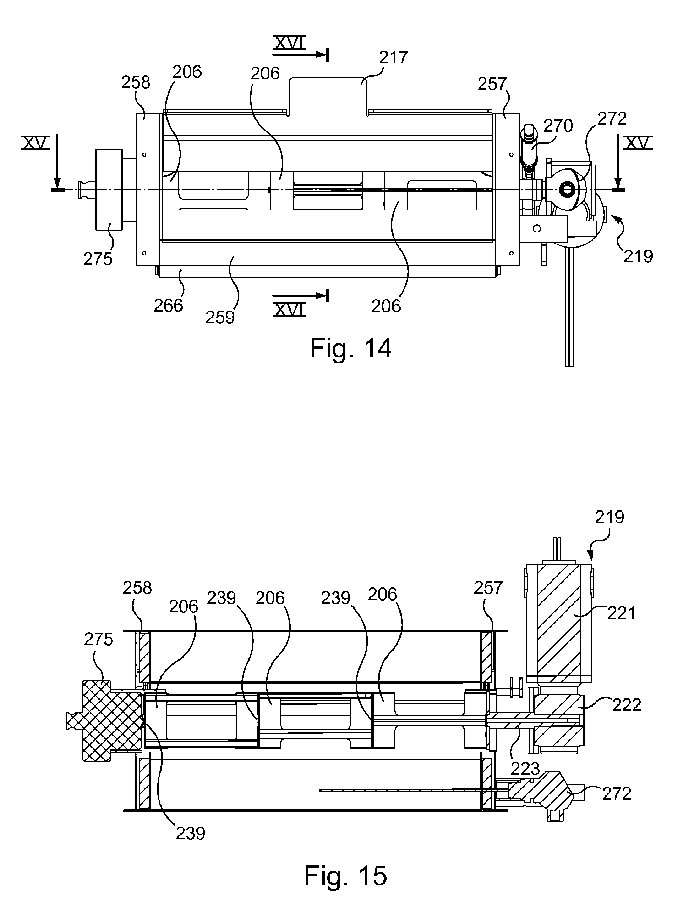

Ces tambours 206 sont fixés deux à deux grâce aux orifices 237 qu'ils comportent dans leur paroi frontale 228 respective et grâce aux éléments de raccordement 239 (figures 15 et 16) qu'ils comportent sur leur paroi de fond 229 respective.

L'organe de maintien 265 de la zone de congélation 252 est formé par deux rouleaux 266 et 267 mobiles en rotation sur eux-mêmes et supportés par une paroi en arc de cercle 268.

Cet organe de maintien 265 présente en outre une pièce de pivotement 269 à laquelle est fixé un vérin 270 configuré pour faire pivoter cet organe de maintien 265.

Grâce à ce vérin 270, l'organe de maintien 265 est configuré pour admettre deux configurations, une configuration de soutien dans laquelle les trois tambours 206 reposent sur les deux rouleaux 266 et 267 et une configuration de déchargement dans laquelle les tambours 206 ne reposent plus sur les rouleaux 266 et 267 et tombent de la zone 252 pour glisser dans la zone de récupération 254, sur sa plaque de séparation.

Comme on le verra ci-après, cette configuration de soutien est admise lorsque les tambours 206 sont en rotation sur eux-mêmes.

Cet organe de maintien 265 est configuré pour être disposé entre les deux flasques 257 et 258, juste en dessous du couloir interne 264 ; et la pièce de pivotement est quant à elle configurée pour être disposée, avec le vérin 270, à l'extérieur du flasque 257.

Cet organe de maintien 265 est fixé au flasque 257 et au flasque 258 par l'intermédiaire de pattes de fixation 271.

La zone de congélation 252 comporte également une sonde de température 272 située à l'extérieur du flasque 257 et pourvue d'une tige entrant dans l'espace interne de la zone 252.

L'unité d'entraînement en rotation 219 est quant à elle similaire à l'unité d'entraînement en rotation 19 visible sur les figures 2 à 4.

Cette unité d'entraînement en rotation 219 est donc pourvue d'un moteur électrique 221, d'un réducteur 222, d'un arbre rotatif 223 et d'un support 225 pourvu d'une portion magnétique (non représentée).

Cette unité d'entraînement en rotation 219 est fixée sur une plaque d'interface 273 elle-même fixée sur le flasque 257.

Un des tambours 206 est configuré pour être fixé par aimantation sur le support 225 de l'unité d'entraînement en rotation 219, lequel support 225 est configuré pour être passé au travers de l'orifice 261 du flasque 257.

La zone de congélation 252 présente en outre un bouchon magnétique 275 situé à l'opposé du support 225 et qui est configuré pour être appuyé contre un autre des tambours 206 (situé à l'opposé du tambour 206 fixé au support 225) dans le but de maintenir les trois tambours 206 alignés et disposés les uns contre les autres.

On va maintenant décrire l'utilisation du système de congélation 203.

On ne répètera pas ici les étapes de remplissage des paillettes avec les volumes de substance biologique, ni de remplissage partiel des tambours avec les paillettes puisque les tambours 206 sont identiques au tambour 6 et donc qu'ils sont remplis partiellement de paillettes de la même manière que décrite précédemment et dans les mêmes proportions.

A la différence du procédé décrit ci-dessus, trois tambours 206 sont ici insérés dans la zone de congélation 252 de manière alignée longitudinalement.

Pour cela, les trois tambours sont placés les uns contre les autres, c'est-à-dire avec l'élément de raccordement 239 saillant de la paroi de fond 229 d'un premier tambour 206 qui est reçu dans l'orifice 237 de la paroi frontale 228 d'un deuxième tambour et avec l'élément de raccordement 239 saillant de la paroi de fond 229 de ce deuxième tambour 206 qui est reçu dans l'orifice 237 de la paroi frontale 228 d'un troisième tambour 206.

Les trois tambours 206 sont insérés dans le couloir interne 264 de la zone de congélation 252 jusqu'à ce que le premier tambour 206 vienne contre le support 225 de l'unité d'entraînement en rotation 219 où ils sont alors fixés ensemble par aimantation.

Les trois tambours 206 sont insérés dans la zone de congélation 252 par l'orifice 261 du flasque 258 et le bouchon magnétique 275 est à son tour inséré partiellement par cet orifice 262 jusqu'à entrer en contact avec la paroi de fond du troisième tambour 206 ; de sorte que ces trois tambours 206 sont interposés de manière serrée entre ce bouchon 275 et le support 225.

A cet instant, l'organe de maintien 265 est dans sa configuration de soutien et les trois tambours 206 reposent sur les deux rouleaux 266 et 267.

Ensuite, l'unité d'entraînement en rotation 219 est mise en fonctionnement de sorte que les trois tambours 206 sont entraînés en rotation sur eux-mêmes, leur axe de rotation respectif étant coaxial à leur paroi latérale respective.

Les tambours 206 tournent sur eux-mêmes et, comme ils sont soutenus par les rouleaux 266 et 267 mobiles, ces derniers tournent également sur eux-mêmes.

Enfin, l'azote arrive par la partie 215 du dispositif d'injection, se détend pour devenir gazeux, chemine dans le couloir 251, passe à travers le redresseur statique 253 puis chemine vers la zone de congélation 252 jusqu'à être guidé par les nervures formées par la plaque de guidage 217 et le support 260 de cette zone 252 et ainsi être directement envoyé au niveau du couloir interne 264 de cette zone 252 où sont disposés en rotation sur eux-mêmes les tambours 206 qui comportent des paillettes.

Comme les tambours 206 sont similaires au tambour 6, les paillettes qui y sont introduites sont mises en mouvement les unes par rapport aux autres et par rapport à la paroi latérale 27 de l'unité 6, autrement dit les paillettes sont brassées, et bénéficient d'un très bon échange thermique en étant soumises à la fois au phénomène de convection grâce aux fenêtres ménagées dans ces tambours 206 et au phénomène de conduction grâce aux parois latérales de ces tambours 206.

Le flux d'azote gazeux sort ensuite de la zone de congélation 252 pour atteindre le ventilateur centrifuge 250 et ainsi être envoyé à nouveau dans le couloir 251.

Une fois les paillettes des tambours congelées, le vérin 270 est activé de sorte qu'il agit sur la pièce de pivotement 269 afin de faire pivoter l'organe de maintien 265, en particulier la paroi 268 en arc de cercle et ainsi abaisser le rouleau 266.

De cette manière, les tambours 206 ne sont plus soutenus par les deux rouleaux 266, 267 et ces tambours 206 tombent de la zone de congélation 252 et atterrissent sur la plaque de séparation de la zone de récupération 254 formée en tiroir amovible.

Les tambours 206 sont récupérés dans ce tiroir 254, où ils se trouvent dans de l'azote gazeux, avant que ces paillettes ne soient mises dans un lieu de stockage où elles sont immergées dans de l'azote liquide.

Dans des variantes non illustrées :
- le flux d'azote gazeux n'est pas perpendiculaire par rapport à la paroi latérale du tambour comme cela est le cas sur les figures 1 à 17, mais le flux est plutôt légèrement incliné ; cela peut être dû au fait que l'axe de rotation des tambours n'est pas coaxial à la paroi latérale et que par conséquent la trajectoire décrite par les tambours est plutôt conique ;
- l'axe de rotation des tambours n'est pas coaxial mais plutôt excentrique ;
- les ouvertures sont différentes de fenêtres ou de fentes, ces ouvertures ont plutôt une forme de grillage ou sont formées par une succession de trous ménagés dans la paroi latérale, ces trous ayant une forme identique ou étant de différentes formes ;
- les tambours comportent plus ou moins de fentes et/ou de fenêtres qu'illustré sur les figures ;
- l'unité de conditionnement contient plus ou moins de paillettes, tant que sa contenance reste plus grande que la pluralité de paillettes ;
- l'unité de conditionnement ne présente pas d'ouverture ménagée sur la paroi latérale longitudinale ;
- l'unité de conditionnement formée par le tambour n'est pas fixée par aimantation sur l'arbre rotatif, mais est plutôt montée de manière auto-serrante ou par le biais d'un clip ou par le biais d'une pince ;
- l'unité de conditionnement formée par le tambour comporte un couvercle latéral ménagé sur la paroi latérale longitudinale plutôt qu'un couvercle formé par la paroi frontale de ce tambour ;
- les reliefs de l'unité de conditionnement ne sont pas formés par des aubes, mais plutôt par des tiges ou par des protubérances ayant d'autres formes, ou il n'y a pas de relief ;
- l'unité de conditionnement présente d'autres formes qu'une forme circulaire, voire cylindrique, par exemple l'unité de conditionnement présente une section rectangulaire ou plus généralement polygonale, voire elliptique ;
- la cinétique de températures est différente car le remplissage des paillettes est directement effectué à une température de l'ordre d'environ 4° et donc l'étape d'équilibration n'est pas nécessaire, les paillettes sont directement disposées dans un système de congélation ;
- le coffre 7 n'est pas pourvu d'un couvercle présentant une ouverture vitrée permettant de voir à l'intérieur de l'enceinte 9 ;
- le remplissage des paillettes se fait à une température de l'ordre d'environ +4°C et de ce fait, aucune étape d'équilibration n'est nécessaire, les paillettes sont donc introduites directement en vrac dans le tambour, lequel est introduit dans le système de congélation ;
- les systèmes de congélation ne bénéficient pas d'une convection de type forcé mais plutôt d'une convection naturelle ; et/ou
- l'unité d'entraînement en rotation n'est pas fixée à l'enceinte de refroidissement dans laquelle circule le flux d'agent de refroidissement, mais le système de congélation présente la forme d'un tunnel ayant une succession de zones à différentes températures avec un convoyeur pour faire passer l'unité de conditionnement successivement dans les différentes zones (bien entendu, un élément de séparation tel qu'un petit rideau par exemple en kevlar est prévu entre les différentes zones et cet élément s'efface au passage de l'unité de conditionnement) ; et le convoyeur a par exemple par endroits des rouleaux rotatifs sur lesquels se prend l'unité de conditionnement afin d'être mise en rotation sur elle-même.

On rappelle plus généralement que l'invention ne se limite pas aux exemples décrits et représentés.

## Revendications

1. Ensemble de congélation d'une pluralité de tubes de conditionnement chacun rempli d'un volume prédéterminé de substance biologique, dans lequel chaque dit tube de conditionnement (5) est entraîné en rotation dans un flux d'agent de refroidissement, ledit ensemble comportant une enceinte de refroidissement (9 ; 209) configurée pour être traversée par ledit flux d'agent de refroidissement et une unité de conditionnement (6 ; 106 ; 206) amovible et placée dans ladite enceinte de refroidissement (9 ; 209) ; ledit ensemble étant **caractérisé en ce que** ladite unité de conditionnement (6 ; 106 ; 206) est pourvue d'une contenance plus grande que ladite pluralité de dits tubes de conditionnement (5) pour accueillir directement cette pluralité de dits tubes de conditionnement (5) ; **en ce que** ladite enceinte de refroidissement (9 ; 209) est fixe ; et **en ce qu'**il comporte une unité d'entraînement en rotation (19 ; 219) de ladite unité de conditionnement (6 ; 106 ; 206), laquelle unité d'entraînement en rotation (19 ; 219) est pourvue d'une interface de connexion (25, 26) sur laquelle est rapportée ladite unité de conditionnement (6 ; 106 ; 206) amovible.

2. Ensemble selon la revendication 1, **caractérisé en ce qu'il** comporte un système d'équilibration (2) pourvu d'une zone d'équilibration à une première température stable prédéterminée, laquelle zone est configurée pour recevoir durant une première période prédéterminée ladite au moins une unité de conditionnement (6 ; 106 ; 206).

3. Ensemble selon l'une des revendications 1 et 2, **caractérisé en ce qu'il** comporte au moins un système de congélation (3 ; 203) pourvu d'au moins une zone de congélation formée par ladite enceinte de refroidissement (9 ; 209), laquelle zone est configurée pour être refroidie par ledit flux d'agent de refroidissement qui y circule, entre une deuxième température prédéterminée et une troisième température prédéterminée.

4. Ensemble selon les revendications 2 et 3, **caractérisé en ce que** ladite deuxième température prédéterminée est inférieure ou égale à ladite troisième température prédéterminée.

5. Ensemble selon l'une quelconque des revendications 1 à 4, **caractérisé en ce que** ladite unité d'entraînement en rotation (19 ; 219) est montée sur ladite enceinte de refroidissement (9 ; 209).

6. Ensemble selon la revendication 5, **caractérisé en ce que** ladite unité d'entraînement en rotation (19 ; 219) est fixée à l'extérieur de ladite enceinte de refroidissement (9 ; 209) et présente un arbre d'entraînement (23 ; 223) s'étendant de ladite unité d'entraînement en rotation (19 ; 219) et se prolongeant jusqu'à déboucher à l'intérieur de ladite enceinte de refroidissement (9 ; 209), ledit arbre d'entraînement (23 ; 223) étant pourvu à une extrémité de ladite interface de connexion (25 ; 26 ; 225), laquelle extrémité se trouve dans ladite enceinte de refroidissement (9 ; 209).

7. Ensemble selon la revendication 6, **caractérisé en ce que** ladite interface de connexion est formée par un support (25 ; 225) pourvu d'une pièce de fixation (26) configurée pour coopérer avec ladite unité de conditionnement (6 ; 106 ; 206).

8. Ensemble selon la revendication 7, **caractérisé en ce que** ladite unité de conditionnement (6 ; 106 ; 206) présente une paroi de fond métallique (29 ; 129 ; 229) et la pièce de fixation est formée par une portion magnétique (26) disposée dans ledit support (25 ; 225), laquelle portion magnétique (26) permet la fixation par aimantation de ladite unité de conditionnement (6 ; 106 ; 206) sur ledit support (25 ; 225), par l'intermédiaire de ladite paroi de fond (29 ; 129 ; 229).

9. Ensemble selon l'une quelconque des revendications 1 à 8, **caractérisé en ce que** ladite unité de conditionnement (6 ; 106 ; 206) est configurée pour être entraînée en rotation sur elle-même.

10. Ensemble selon l'une quelconque des revendications 1 à 9, **caractérisé en ce que** ladite unité de conditionnement (6 ; 106 ; 206) présente au moins une paroi latérale longitudinale (27 ; 127) et un espace interne (30 ; 130) configurée pour accueillir, suivant ladite direction longitudinale de ladite au moins une paroi latérale (27 ; 127), ladite pluralité de dits tubes de conditionnement (5).

11. Ensemble selon la revendication 10, **caractérisé en ce que** ladite unité de conditionnement (6 ; 106 ; 206) est configurée pour être placée dans ladite enceinte de refroidissement (9 ; 209) de telle sorte que ledit flux d'agent de refroidissement rencontre ladite au moins une paroi latérale (27 ; 127).

12. Ensemble selon l'une quelconque des revendications 1 à 11, **caractérisé en ce que** ladite unité de conditionnement (6 ; 106 ; 206) présente au moins une paroi latérale longitudinale (27 ; 127) dans laquelle est ménagée au moins une ouverture (33 ; 144) et ladite au moins une unité de conditionnement (6 ; 106 ; 206) est disposée dans ladite enceinte (9 ; 209) de telle sorte que ledit flux d'agent de refroidissement passe au travers de ladite au moins une ouverture (33 ; 144) pour rencontrer lesdits tubes de conditionnement (5).

13. Ensemble selon la revendication 12, **caractérisé en ce que** ladite au moins une ouverture présente la forme d'une fenêtre (33) s'étendant suivant ladite direction longitudinale.

14. Ensemble selon la revendication 13, **caractérisé en ce que** ladite au moins une ouverture est formée par une série de fentes (144) débouchantes et successivement disposées suivant ladite direction longitudinale, chaque fente (144) ayant une direction principale distincte de ladite direction longitudinale.

15. Ensemble selon l'une quelconque des revendications 1 à 14, **caractérisé en ce que** ladite unité de conditionnement (6 ; 106 ; 206) présente au moins une paroi latérale longitudinale (27 ; 127) et comporte un couvercle amovible (28 ; 128 ; 228) métallique et au moins un organe magnétique (41 ; 141) permettant la fixation par aimantation dudit couvercle amovible (28 ; 128 ; 228) sur ladite au moins une paroi latérale (27 ; 127).

16. Ensemble selon la revendication 15, **caractérisé en ce que** ledit couvercle (128) présente une portion de préhension (143).

17. Ensemble selon l'une quelconque des revendications 1 à 16, **caractérisé en ce qu'il** comporte plusieurs unités de conditionnement (6 ; 206) pourvues chacune d'une paroi frontale (28 ; 228) et d'une paroi de fond (29 ; 229) opposée à ladite paroi frontale (28 ; 228), lesquelles définissent avec au moins une paroi latérale (27) au moins partiellement un espace interne (30) ; une première desdites unités de conditionnement (6 ; 206) présente un orifice de réception (37 ; 237) ménagé dans ladite paroi frontale (28 ; 228) et configuré pour recevoir un élément de raccordement (239) saillant d'une paroi de fond (229) d'une deuxième desdites unités de conditionnement (206) avec laquelle ladite première unité de conditionnement (6 ; 206) est agencée pour coopérer ; et ladite première unité de conditionnement (6 ; 206) présente un élément de raccordement (39 ; 239) saillant de ladite paroi de fond (29 ; 229) et configuré pour être introduit dans un orifice de réception (237) ménagé dans une paroi frontale (228) d'une troisième desdites unités de conditionnement (206) avec laquelle ladite première unité de conditionnement (6 ; 206) est également agencée pour coopérer.

18. Ensemble selon l'une quelconque des revendications 1 à 17, **caractérisé en ce que** ladite unité de conditionnement (6 ; 206) présente une paroi frontale (28 ; 228) et une paroi de fond (29 ; 229) opposée à ladite paroi frontale (28 ; 228), lesquelles définissent avec au moins une paroi latérale (27) au moins partiellement un espace interne (30) ; ladite paroi frontale (28) est configurée pour être montée à fleur d'une première extrémité (31) de la dite au moins une paroi latérale (27) ; et ladite paroi de fond (29) est configurée pour être montée contre ladite surface latérale interne (30) de la dite au moins une paroi latérale (27), à proximité d'une deuxième extrémité (32) de cette paroi latérale (27) qui est opposée à ladite première extrémité (31).
